# EUROPÄISCHE PATENTSCHRIFT

(11) **EP 1 440 310 B1**
(45) Veröffentlichungstag und Bekanntmachung des Hinweises auf die Patenterteilung: **30.11.2011**
(21) Anmeldenummer: 02781136.3
(22) Anmeldetag: 15.10.2002
(51) Int. Cl.: G01N 29/22

(54) **VERFAHREN UND VORRICHTUNG ZUR ULTRASCHALLPRÜFUNG MITTELS EINES LINEAREN ARRAYS UND MIT ECHOSTART**
METHOD AND DEVICE FOR ULTRASONIC TESTING BY MEANS OF A LINEAR ARRAY AND WITH ECHOSTART
PROCEDE ET DISPOSITIF DE CONTROLE PAR ULTRASONS AU MOYEN D'UN RESEAU LINEAIRE ET D'UN ECHOSTART

(30) Priorität: 23.10.2001 DE 10151546
(43) Veröffentlichungstag der Anmeldung: 28.07.2004
(73) Patentinhaber: Agfa NDT GmbH, D-50354 Hürth (DE); Prause, Reinhard, 53757 St. Augustin (DE)
(72) Erfinder: PRAUSE, Reinhard, 53757 St. Augustin (DE)
(74) Vertreter: Bauer, Wulf
(86) Internationale Anmeldenummer: PCT/DE2002/003889
(87) Internationale Veröffentlichungsnummer: WO 2003/038427

(56) Entgegenhaltungen:
- DE-A- 19 804 298
- FR-A- 2 670 583
- FR-A- 2 796 153
- US-A- 4 022 055

## Beschreibung

Die Erfindung bezieht sich auf ein Verfahren zur Ultraschallprüfung eines Prüfobjekts, bei dem Ultraschall von einem Prüfkopf emittiert wird, über eine Vorlaufstrecke das Prüfobjekt erreicht und anschließend mindestens ein Echosignal des eingeschallten Ultraschalls vom Prüfkopf erfasst wird, wobei der ausgesandte Ultraschall sich in einem Schallfeld und um einen Zentralstrahl herum ausbreitet, der Zentralstrahl nicht rechtwinkelig auf die Oberfläche des Prüfobjektes auftritt und zwischen Prüfkopf und Prüfobjekt eine Reflektionsfläche vorgesehen ist, die sich außerhalb des Zentralstrahls, aber innerhalb des Schallfeldes befindet und so angeordnet ist, dass der auf die Reflektionsfläche auftreffende Teil des ausgesandten Ultraschalls nach Reflektion im wesentlichen rechtwinklig auf die Oberfläche des Prüfobjektes auftrifft, von dort zurück läuft und als Signal für einen Echostart benutzt wird, sowie auch eine Vorrichtung zur Durchführung dieses Verfahrens nach dem Oberbegriff des Patentanspruchs 9.

Aus der DE 19804298 A sind dieses Verfahren und die nach diesem Verfahren arbeitende Vorrichtung bekannt. Dieses vorbekannte Verfahren und die entsprechende Vorrichtung ermöglichen es, folgendes Problem zu vermeiden: Bei nicht rechtwinkliger Einschallung in die Oberfläche des Prüfobjektes gelangt der Anteil des ausgesandten Ultraschalls, der an der Oberfläche des Prüfobjektes reflektiert wird und gar nicht erst in das Prüfobjekt eintritt, allenfalls als schwaches Signal des Eintrittsechos in den Prüfkopf zurück. Die Qualität dieses Signals des Eintrittsechos ist zudem noch abhängig von der Beschaffenheit der Oberfläche des Prüfobjektes. Dadurch ist es manchmal gar nicht möglich, ein direktes Signal des Eintrittsechos zu erhalten.

Nach dem Stand der Technik wird zusätzlich eine im Randbereich des ausgesandten Schallfeldes angeordnete Reflektionsfläche angebracht, die man auch als Spiegel bezeichnen kann. Sie ist so positioniert und ausgerichtet, dass der auf sie auftreffende Randstrahl im wesentlichen rechtwinkelig auf die Oberfläche des Prüfobjektes auftrifft. Das Signal des Eintrittsechos wird somit über einen indirekten Weg erhalten. Der Weg ist etwas länger als der Weg des Zentralstrahls zum gleichen Punkt auf der Oberfläche des Prüfobjektes. Vorteilhafterweise ist die Reflektionsfläche möglichst nahe der Oberfläche des Prüfobjektes angeordnet, damit der Wegunterschied zwischen dem indirekten Weg und dem direkten Weg möglichst gering ist.

Dieses Verfahren und die entsprechende Vorrichtung haben sich allgemein bewährt. Um die Prüfgeschwindigkeit und auch die Qualität des Aussage über eine Fehlstelle im Prüfobjekt zu verbessern, ist es vorteilhaft, nicht nur mit einem einzelnen Schwinger in einem Prüfkopf zu arbeiten, wie dies der genannte Stand der Technik beschreibt. Es ist bekannt, dass durch mehrere Prüfköpfe die Prüfgeschwindigkeit erhöht werden kann.

Hier setzt nun die Erfindung ein. Sie hat es sich zur Aufgabe gemacht, das Verfahren und die Vorrichtung der eingangs genannten Art dahingehend weiter zu entwickeln, dass die Prüfgeschwindigkeit und auch die Qualität der Aussage über eine Fehlstelle im Prüfobjekt erhöht werden.

Diese Aufgabe wird verfahrensmäßig ausgehend von dem Verfahren der eingangs genannten Art dadurch gelöst, dass der Prüfkopf ein lineares Array mit n Einzelschwingern ist, dass jedem Einzelschwinger eine eigene Reflektionsfläche zugeordnet ist, dass für jeden Einzelschwinger ein eigenes Echostartsignal erzeugt wird, dass die von jedem Einzelschwinger aufgenommenen Empfangssignale digitalisiert werden und diese Digitalisierung individuell für jeden Einzelschwinger mit dem Echostartsignal dieses Einzelschwingers gestartet wird. Vorrichtungsmäßig wird sie gelöst durch die Merkmale des Patentanspruchs 9.

Erfindungsgemäß wird eine bestimmte Mehrschwingeranordnung, nämlich ein lineares Array aus n Einzelschwingern genutzt. Jedem einzelnen Einzelschwinger ist seine eigene Reflektionsfläche zugeordnet. Damit ist es möglich für jeden Einzelschwinger, ein eigenes Echostartsignal zu erhalten. Diese individuellen Echostartsignale werden nun dazu benutzt, die Digitalisierung der Empfangssignale jeweils zu starten. Dadurch ist es möglich, die digitalisierten Empfangssignale jedes einzelnen Einzelschwingers abzuspeichern und gleichzeitig oder nacheinander gewonnene Empfangssignale unterschiedlicher Einzelschwinger in einem Auswerteschritt miteinander zu vergleichen, zu kombinieren und zu analysieren. Auf diese Weise erhält man deutlich mehr Informationen als von n unabhängig voneinander betriebenen Prüfköpfen. Gerade weil die Digitalisierung mit dem Echostartsignal des individuellen Einzelschwingers gestartet wird, ist es möglich, die Signale benachbarter Einzelschwinger mit einander zu vergleichen, sie beispielsweise zu überlagern, um ein räumliches Bild einer Fehlstelle zu erhalten. Es können mehrere Auswertungen unterschiedlicher Kombinationen von Einzelschwingern durchgeführt werden. Die Auswertungen können zu beliebiger Zeit nach der eigentlichen Messung erfolgen.

Nun ist es an sich bekannt, dass man ein lineares Array so betreiben kann, dass man die aus den Empfangssignalen benachbarter Einzelschwinger erhaltenen Informationen kombiniert. Bei Schrägeinschallung ist dies aber mit dem Problem behaftet, dass man nicht sicher ist, welchen Zeitabschnitt des Empfangssignals man jeweils für den Vergleich heranziehen muss. Durch den Echostart der Digitalisierung ist dieses Problem nun gelöst. Es ist möglich, zu unterschiedlichen Zeiten gewonnene Informationen über eine Fehlstelle im Prüfobjekt miteinander zu kombinieren. Der Start der Digitalisierung ist jeweils der Startpunkt für den Vergleich eines bestimmten Signals mit demjenigen eines anderen Einzelschwingers.

Auf der Oberfläche der Prüfobjektes bilden die Hauptstrahlen der Einzelschwingers n Treffpunkte, die entlang einer Linie, vorzugsweise einer Geraden, liegen. Die räumliche Zuordnung zwischen Prüfkopf und Prüfobjekt wird durch zusätzliche, an sich bekannte Maßnahmen sichergestellt. Typische Prüfaufgaben sind beispielsweise das Erfassen einer Schweißnaht zwischen zwei Blechen oder bei einem geschweißten Rohr oder die Rohrprüfung bzw. die Prüfung von Stangenmaterial. Bei diesen Prüfobjekten ist also stets eine Längsausrichtung gegeben, die durch die Ausrichtung der Schweißnaht oder die Längsachse des Prüfobjektes definiert ist. Entlang dieser Längsausrichtung und parallel zu ihr wird der Prüfkopf während der Prüfung bewegt. Die Geschwindigkeit, mit der sich der Prüfkopf relativ zum Prüfobjekt bewegt, kann dabei deutlich höher sein als beim Stand der Technik. Der Ort des Prüfkopfes relativ zum Prüfobjekt wird durch Maßnahmen erfasst, die aus dem Stand der Technik bekannt sind. Nur beispielhaft wird auf die PCT/DE 01/01814 verwiesen.

In einer bevorzugten Weiterbildung werden die digitalisierten Empfangssignale (Empfangsdaten) in einem Speicher gespeichert und werden während einer Auswertung die Empfangssignale unterschiedlicher Einzelschwinger und/oder unterschiedlicher Kombinationen von Einzelschwingern nach Amplitude und Laufzeit analysiert. Auf diese Weise kann eine gefundene Fehlstelle speziell analysiert werden. Für eine Auswertung mit einer Art Lupenfunktion werden die Signale benachbarter Einzelschwinger herangezogen, um eine Fehlstellen besser zu charakterisieren. Es ist also eine deutlich höhere Auflösung gezielt und auf Wunsch möglich als nach dem Stand der Technik.

In einer weiteren bevorzugten Ausführung sind die n Einzelschwinger individuell so angesteuert, dass sie jeweils ein eigenes Sendesignal erhalten. Dadurch kann jeder Einzelschwinger unabhängig von anderen arbeiten.

Weiterhin ist es vorteilhaft, zumindest temporär mehrere Einzelschwinger zu einer Gruppe zusammenzuschalten, die während der Zusammenschaltung wie ein Einzelschwinger betrieben wird. Auf diese Weise lässt sich die Prüfgeschwindigkeit erhöhen.

Weiterhin ist es vorteilhaft, dass alle Einzelschwinger den selben Abstand von der Oberfläche des Prüfobjektes haben und dass ihre Hauptstrahlen mit dem selben Einschallwinkel auf die Oberfläche des Prüfobjektes auftreffen, und dass sich die Reflektionsflächen der einzelnen Einzelschwinger in der selben geometrischen Anordnung zum Einzelschwinger, insbesondere hinsichtlich Abstand vom Hauptstrahl und Winkel zum Hauptstrahl, wie bei allen anderen Einzelschwinger befinden.Aufgrund der identischen Anordnung der einzelnen Einzelschwinger, der zugehörigen Reflektionsflächen und auch der Einschallpunkte auf dem Prüfobjekt ist ein Vergleich der Signale unterschiedlicher Einzelschwingen in verbesserter Form möglich.

Als besonders vorteilhaft hat es sich herausgestellt, die Einzelschwinger baugleich auszuführen. Dadurch wird ein Vergleich der Empfangssignale unterschiedlicher Einzelschwinger erleichtert.

Weiterhin ist es sehr vorteilhaft, die Reflektionsflächen baugleich auszuführen, vorzugsweise einstückig zusammenhängend auszubilden. Dies erleichtert die Ausführung, Anordnung und Ausrichtung der individuellen Reflektionsflächen des einzelnen Einzelschwingers.

Als besonders vorteilhaft hat es sich herausgestellt, dass die Reflektionsflächen so ausgeführt sind, dass hinter der Reflektionsfläche befindliches Material entweder den Ultraschall abschwächt und/oder so leitet, dass der in das Material eingedrungene Anteil des auf die Reflektionsfläche auftreffenden Ultraschalls weder einen Einzelschwinger noch das Prüfobjekt erreicht. Durch diese Maßnahmen wird verhindert, dass aus dem Material hinter der Reflektionsfläche wieder ein Schallimpuls austritt, der sich zum Prüfobjekt ausbreiten könnte und von dort oder gleich direkt von der Reflektionsfläche zum Prüfkopf bzw. einem Einzelschwinger gelangen könnte. Es wird also vermieden, dass von den die Reflektionsflächen ausbildenden Reflektoren sogenannte Phantomsignale zurückkommen können.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die im folgenden unter Bezugnahme auf die Zeichnung näher erläutert werden. In dieser Zeichnung zeigen:
Fig. 1: Eine perspektivische Darstellung der Ultraschallprüfung eines Rohrs mittels eines linearen Arrays und eines länglichen Spiegels bzw. Reflektors,
Fig. 2: Eine Anordnung ähnlich Figur 1, jedoch nunmehr in Stirnansicht,
Fig. 3: Eine Seitenansicht eines Reflektors in einer ersten Ausführung,
Fig. 4: Eine Seitenansicht eines Reflektors in einer zweiten Ausführung,
Fig. 5: Eine Seitenansicht eines Reflektors in einer dritten Ausführung,
Fig. 6: Eine Seitenansicht eines Reflektors in einer vierten Ausführung,
Fig. 7: Eine Seitenansicht eines Reflektors in einer fünften Ausführung,
Fig. 8: Ein Diagramm über der Zeit für drei unterschiedliche Parameter, nämlich der Empfangsspannung im oberen Teilbild, von Steuerspannungen im mittleren Teilbild und des erhaltenen digitalen Signals eines Einzelschwingers im unteren Teilbild,
Fig. 9: Eine perspektivische Darstellung der gespeicherten Signale von insgesamt acht Einzelschwingern und
Fig. 10: Ein Blockdiagramm für ein Prüfgerät, dargestellt ist die Auswerteeinheit (siehe Figur 2) vom A/D-Wandler bis Monitor.

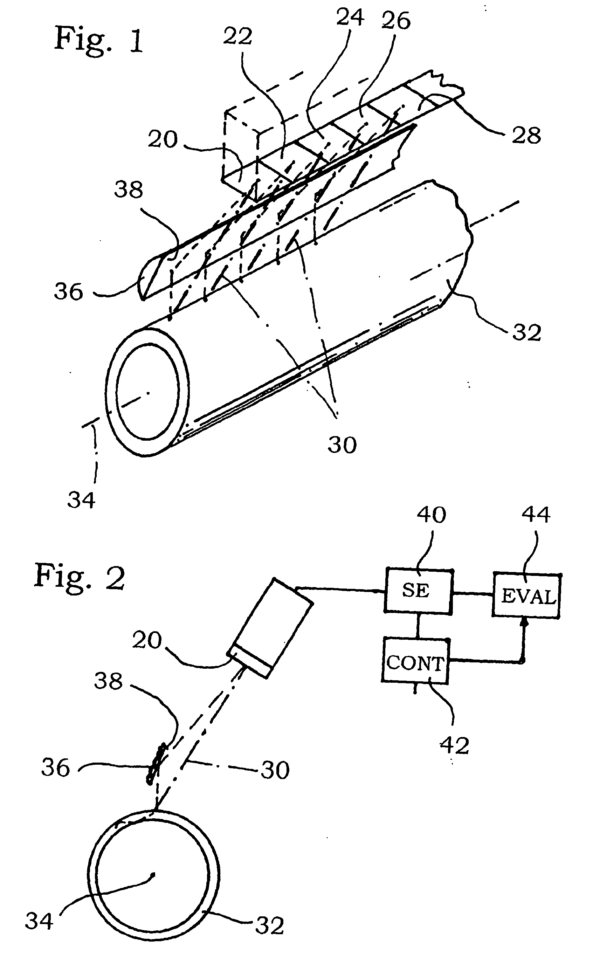

Wie aus Figur 1 ersichtlich ist, wird aus einer Zeile baugleicher, nebeneinander angeordneter Einzelschwinger 20, 22, 24 usw. jeweils ein Ultraschallimpuls entlang eines Hauptstrahls 30, der strichpunktiert dargestellt ist, auf die Oberfläche eines Prüfobjekts, das hier als Rohr 32 ausgeführt ist, geschallt. Der Hauptstrahl 30 trifft in einem Winkel ungleich 90°, also schräg, auf die Oberfläche des Rohrs 32 auf.

Wie Figur 1 zeigt, sind die n=5 Einzelschwinger 20 parallel zum Rohr 32, nämlich einer Rohrachse 34, ausgerichtet. Sie haben alle den selben Abstand von der Oberfläche des Rohrs 32 und damit auch von der Rohrachse 34.Sie haben auch alle die selbe Winkelstellung zum Rohr 32. Die Einzelschwinger bilden ein Array, das als phased array betrieben werden kann. Die bislang beschrieben Anordnung ist Stand der Technik.

Die Hauptstrahlen 30 der Einzelschwinger 20 treffen in Auftreffpunkten der Oberfläche des Rohrs auf. Diese Auftreffpunkte liegen auf einer Geraden und sind im gleichen Abstand von einander.

Um den Hauptstrahl 30 herum findet die Ausstrahlung von Ultraschall statt, in der Form handelt es sich meist um eine Keule. Zu dem Abstrahlverhalten von Einzelschwingern und auch Arrays wird auf das DE- Buch J. und J. Krautkrämer, Werkstoffprüfung mit Ultraschall, fünfte Auflage verwiesen.

Im Bereich der Schallemission jedes Einzelschwingers 20, außerhalb des Hauptstrahls 30, ist ein Reflektor 36 angeordnet, der individuell für jeden Einzelschwinger eine eigene Reflektionsfläche 38 ausbildet. Der Reflektor 36 ist ein länglicher Stab mit dem Querschnitt eines Kreissegments. Der Reflektor ist parallel zum Rohr 32 und zur Zeile der Einzelschwinger angeordnet. Die Reflektionsflächen sind zusammenhängend, sie sind im gleichen Abstand wie die Einzelschwinger 20 vorgesehen und gehen einstückig ineinander über. Wie besonders Figur 2 besser erkennen lässt, sind die Reflektionsflächen 38 so angeordnet, dass ein an ihnen reflektierter Randstrahl im rechten Winkel auf die Oberfläche des Rohrs 32 auftrifft. Hierzu wird auf die bereits erwähnte DE 19804298 A verwiesen, deren Offenbarungsgehalt zum Bestandteil der Offenbarung der vorliegenden Anmeldung gemacht wird.

Figur 2 zeigt auch, wie die Hauptstrahlen 30 in das Volumen des Rohrs 32 eindringen. Ein Teil der Energie wird aber reflektiert. Für die Hauptstrahlen läuft dieser reflektierte Anteil spiegelbildlich zum Einfallslot seitlich weg, ohne den zugehörigen Einzelschwinger direkt wieder zu erreichen. Vorteilhafterweise sind die Reflektionsflächen 38 so angeordnet, dass der Hauptstrahl zwischen Reflektionsfläche 38 und Prüfobjekt passieren kann, jedenfalls nicht den Reflektor 36 trifft.

Für das beschriebene Prüfverfahren werden sogenannte Sende-Empfangs-Prüfköpfe verwendet. Die Einzelschwinger 20 senden zunächst einen US-Impuls aus, werden also als Sender betrieben. Anschließend, nach einer Totzeit, werden sie als Empfänger betrieben. Im Raum zwischen der Zeile aus Einzelschwingern und der Oberfläche des Prüfobjekts, einschließlich der Reflektionsfläche 38, befindet sich ein Ankoppelmedium, beispielsweise Wasser oder ein Festkörper. Die aus den Figuren ersichtlichen Schallwege ausserhalb des Rohrs 32 finden daher in einer Flüssigkeit oder vorzugsweise in einem festen Körper statt.

Der Reflektor 36 ist zumindest so lang ausgebildet, wie die Länge der Zeile der Einzelschwinger 20. Vorteilhafterweise haben alle Einzelschwinger zusammen und der Reflektor 36 etwa die gleiche Gesamtlänge. Jeder Einzelschwinger 20 hat einen direkten Schallweg entlang des Hauptstrahls 30 und einen indirekten Schallweg, der über Reflektionsfläche 38 auf dem Hinweg und auf dem Rückweg verläuft. Die Auftreffpunkte für den direkten Schallweg und den indirekten Schallweg sind für jeden Einzelschwinger 20 die selben. In der Praxis liegt kein idealer Auftreffpunkt, sondern ein Auftrefffleck vor, vom Zentrum nimmt die Schallenergie nach außen hin ab.

Figur 2 zeigt, dass jedem Einzelschwinger 20 eine SE-Stufe 40, also ein Sende- und Empfangsteil, weiterhin eine Steuerstufe 42 und schließlich eine Auswerteeinheit zugeordnet sind. Jeder Einzelschwinger 22, 22, ... hat seine eigene SE-Stufe 40 und Steuerstufe 42. Die Auswerteeinheit 44 ist vorzugsweise für n Einzelschwinger 20 zusammengefasst, sie hat n Kanäle, also für jeden Einzelschwinger einen eigenen Auswertekanal.

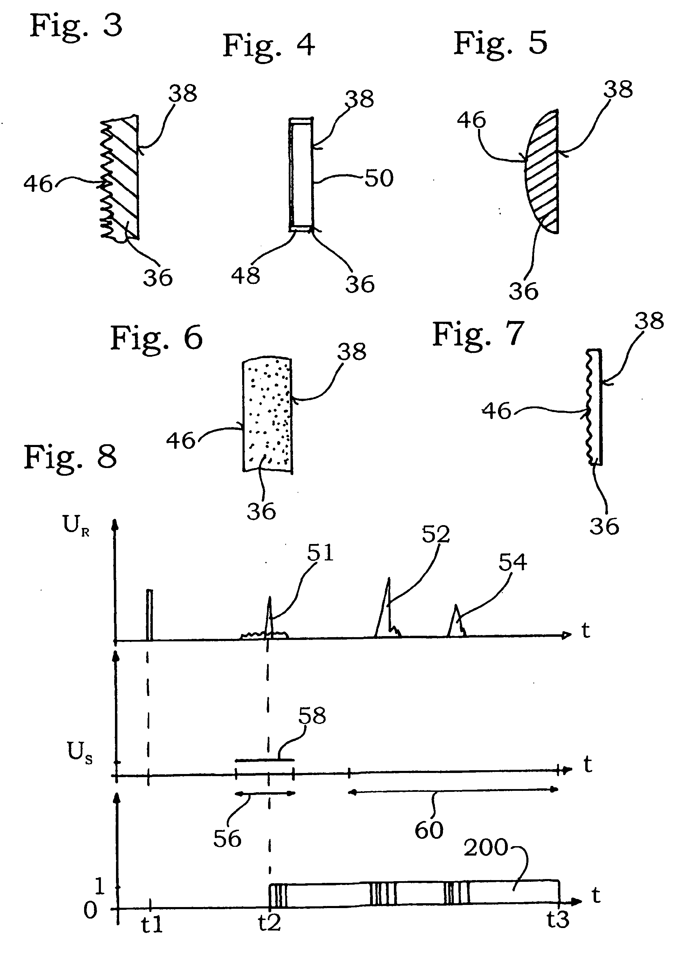

In den Figuren 3 bis 7 sind unterschiedliche Ausbildungen des Reflektors 36 dargestellt. Alle Ausführungen liegt der selbe Gedanke zugrunde. Es soll vermieden werden, dass ein Anteil des auftreffenden Nebenstrahls, der durch die Reflektionsfläche 38 hindurch läuft und somit nicht unmittelbar an dieser reflektiert wird, später einmal wieder an die Reflektionsfläche 38 und von dieser zu einem der Einzelschwinger 20 bis 28 gelangen kann. Anders ausgedrückt sollen sogenannte Phantomsignale verhindert werden, die bei der Messung Fehler im Prüfobjekt vortäuschen könnten.

In der Ausbildung nach Figur 3 ist der Reflektor 36 im Wesentlichen eine längliche Platte. Der Reflektionsfläche 38 gegenüber liegt eine Rückfläche 46, die dicht belegt ist mit pyramidenförmigen Dämpfungskörpern. Der Abstand zwischen zwei pyramidenförmigen Dämpfungskörpern, die in der Zeichnung als Zacken erscheinen, ist kleiner als die Wellenlänge des Ultraschalls im verwendeten Material. Auf diese Weise wird eine Reflektion an der Rückwand 46 unterdrückt.

In der Ausführung nach Figur 4 wird die Reflektionsfläche 38 durch eine dünne Folie, beispielsweise Aluminiumfolie, gebildet. Sie wird von einem Halter 48 gehalten, der sie randseitig festlegt. Hinter der Folie befindet sich Luft. Eine Ultraschallausbreitung findet in Luft praktisch nicht statt. Der Anteil der akustischen Energie aus dem Nebenstrahl, der durch die Folie 50 hindurch getreten ist, wird so geschwächt, dass Phantomsignale unterdrückt werden.

In der Ausbildung nach Figur 5 ist der Reflektor 36 ein Stab mit dem Querschnitt eines Kreissegmentes, wie es auch in Figur 1 eingesetzt wird. Die Rückwand 46 verläuft auf einer Kreislinie. Durch ihre Krümmung wird erreicht, dass in das Volumen des Reflektors 36 gemäß Figur 5 eingedrungene akustische Energie nicht in Richtung zu einem Einzelschwinger 20, 22 usw. aus der Reflektionsfläche 38 austreten kann.

In der Ausführung nach Figur 6 ist der Reflektor 36 ein Stab mit Rechteckquerschnitt, aufgrund der Vergrößerung sind die oberen und unteren Rechteckseiten in Figur 6 nicht zu erkennen. Der Stab ist so hergestellt und mit einem Material gefüllt, das eine starke Absorption akustischer Energie, die in das Volumen des Stabes eingetreten ist, stattfindet. Als Material für derartige Stäbe eignet sich insbesondere sogenanntes backing Material, wie es für die Rückseite von Ultraschallschwingern für deren Bedämpfung verwendet wird. Das Material ist häufig mit Körner aus Wolfram oder anderen Materialpartikeln gefüllt. Hierzu wird auf das bereits genannte DE-Buch verwiesen.

Es ist vorteilhaft in der Ausbildung nach Figur 6 die Rückwand 46 nicht parallel zur Reflektionsfläche 38 verlaufen zu lassen, sondern schräg oder zu krümmen, wie beispielsweise Figur 5 oder pyramidenförmig auszuführen, wie beispielsweise Figur 3.

Weiterhin erkennt man in Figur 6, dass die Dichte der Einschlüsse im Material an der Reflektionsfläche 38 größer ist als an der Rückwand 46 und zu dieser hin abnimmt.

Schließlich zeigt Figur 7 einen Reflektor 36, wie er in der Ausführung nach Figur 2 eingesetzt wird. Er ähnelt der Ausbildung nach Figur 3, jedoch ist nunmehr die Rückwand gewellt, mit einer Wellenlänge kleiner als die Wellenlänge der eingeschalteten akustischen Energie. Auch hier findet an der Rückwand 46 eine Streuung statt, sodass im Wesentlichen durch die Reflektionsfläche 38 keine akustische Energie mehr austreten kann, die aus dem Volumen des Reflektors 36 stammt.

Die gezeigten fünf Ausführungsbeispiele sind nur beispielhaft. Andere Ausführungen sind möglich. Insbesondere aber ist es möglich, die einzelnen Ausbildungen miteinander zu kombinieren. So kann beispielsweise das Ausführungsbeispiel nach Figur 5 eine Rückwand 46 aufweisen, wie sie die Ausführungsbeispiele nach Figur 3 oder 7 zeigen, zudem kann das Volumen mit Streukörpern angefüllt und aus einem dämpfenden Material gefertigt werden, wie dies Figur 6 beispielhaft für sogenannte backing-Körper zeigt.

Figur 8 zeigt im oberen Teilbild den Spannungsverlauf am Ausgang des Empfängers, also der S/E-Stufe 40. Dargestellt ist die Empfangsspannung U_{R} über der Zeit t. Man erkennt zum Zeitpunkt t1 zunächst den sogenannten Sendeimpuls. Im Bereich um den Zeitpunkt t2 kommt eine diffuse Reflektion des Hauptstrahls 30 mit geringem Spannungswert, dieses diffuse Signal kann nicht zur Auslösung einer elektronischen Schaltung verwendet werden, es ist zu unpräzise. Zum Zeitpunkt t2 trifft das Eintrittecho, das über die Reflektionsfläche 38 gelaufen ist und daher den indirekten Weg genommen hat, ein. Es gibt ein klares, scharfes Signal 51, das für die Auslösung einer nachfolgenden elektronischen Stufe gut verwendet werden kann.

Anschließend kommen zwei Signale 52, 54, die beispielweise von Fehlstellen im Rohr 32 herrühren. Diese Signale enthalten somit Informationen über Fehlstellen. Die Auswertung dieser Signale 52, 54 ist daher das Ziel, das man erreichen möchte.

Für jeden Einzelschwinger 20, 22, ... sind Sendeimpuls zum Zeitpunkt t1 und Eintrittsecho zum Zeitpunkt t2 so ähnlich wie möglich, unterschiedlich sind aber die tatsächlichen Signale 52, 54. Aus den unterschiedlichen Signalen kann beispielsweise auf die räumliche Ausbildung einer Fehlstelle geschlossen werden.

Im mittleren Teilbild der Figur 8 ist ein zeitlicher Erwartungsbereich 56 eingezeichnet, der um die Zeit t2 herum liegt. Innerhalb dieses Erwartungsbereichs 56 muss das Eintrittecho fallen. Ansonsten bleibt es unberücksichtigt und es findet keine Digitalisierung statt.

Weiterhin ist während des selben Zeitbereichs eine Schwelle 58 gesetzt, die bei dem Wert Us liegt. Nur Signalspannungen, die diese Schwelle 58 überschreiten, werden weiter verarbeitet. Die Schwelle 58 ist so gelegt, dass die diffusen Reflektionen des Hauptstrahls wegfallen, die klare auf dem indirekten Wege erhaltene Reflektion aber berücksichtigt wird. Von ihr kann ein zeitlich präzises Steuersignal, ein sogenanntes Triggersignal, erhalten werden.

Zeitlich nach dem Erwartungsbereich 56 liegt der Signalerwartungsbereich 60. Es werden nur Signale verarbeitet, die zeitlich in diesen Bereich hineinfallen. Später oder früher eingehende Signale bleiben unberücksichtigt.

Das untere Teilbild von Figur 8 zeigt die nach Digitalisierung erhaltenen Information 200, 220, 240 usw.. Die Digitalisierung wird gestartet zum Zeitpunkt t2, also über das Eintrittsecho, das auf indirektem Weg erhalten wird. Die zum Zeitpunkt t2 gestartete Digitalisierung wird zum Zeitpunkt t3 beendet, dies ist der Endpunkt des Signalerwartungsbereich 60.

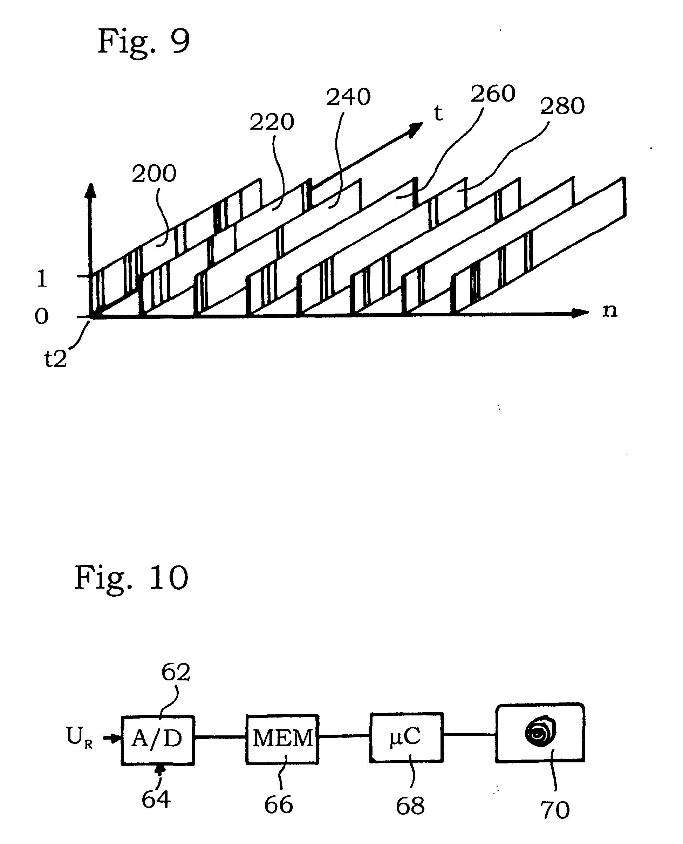

Figur 9 zeigt acht unterschiedliche Signale 200, 220, 240, usw. der Einzelschwinger 20, 22, 24 usw. und in digitalisierter Form, entsprechend dem unteren Teilbild von Figur 8, das das digitalisierte Signal 200 von nur einem Einzelschwinger, nämlich Einzelschwinger 20, zeigt. Die digitalisierten Signale werden in einem Speicher 66 abgespeichert. Die Digitalisierung beginnt für alle digitalisierten Signale zum Zeitpunkt t2.Dieser Zeitpunkt t2 kann individuell für jeden Einzelschwinger anders liegen, es ist der Zeitpunkt des Eintreffens des indirekten Echosignals für den Einzelschwinger.

Dadurch sind die einzelnen digitalisierten Signale, unanhängig vom Zeitpunkt, an dem sie gewonnen wurden, direkt miteinander vergleichbar.

Demgemäß ist es möglich, dass eine Anzahl von Einzelschwingern 22, 24 usw. gleichzeitig oder nach einander betrieben wird. Die erhaltenen Empfangssignale werden nach Digitalisierung abgespeichert wie es Figur 9 zeigt. Sie können danach beliebig oft herangezogen und analysiert werden. Es können unterschiedliche Kombinationen miteinander verglichen und analysiert werden. Auf diese Weise kann eine Fehlstelle, die sich in dem Signal eines Einzelschwingers zeigt, durch Studium der Signale anderer Einzelschwinger besser und zusätzlich charakterisiert werden.

Figur 10 zeigt die Auswerteinheit 44 im Detail. Die analoge Empfangsspannung UR liegt an einem A/D-Wandler 62 an. Dieser erhält über eine Leitung 64 ein Auslöse bzw. Triggersignal von der Steuerstufe 42 zum Zeitpunkt t2.

Das digitalisierte Signal 200, 220 usw. wird in einem Speicher 66 abgespeichert. Über einen digitalen Datenprozessor 68 erfolgt die Auswertung der abgespeicherten digitalisierten Signale in beliebiger Auswahl, Reihenfolge und Zusammenstellung und zu einem beliebeigen Zeitpunkt. Das Ergebnis wird an einem Monitor 70 oder einer anderen Anzeigeeinheit ausgegeben.

Typischerweise liegt n bei 200.

## Patentansprüche

1. Verfahren zur Ultraschallprüfung eines Prüfobjekts (32), bei dem Ultraschall von einem Prüfkopf emittiert wird, über eine Vorlaufstrecke das Prüfobjekt (32) erreicht und anschließend mindestens ein Echosignal (52, 54) des eingeschallten Ultraschalls vom Prüfkopf erfasst wird, wobei der ausgesandte Ultraschall sich in einem Schallfeld und um einen Zentralstrahl herum ausbreitet, der Zentralstrahl nicht rechtwinkelig auf die Oberfläche des Prüfobjektes (32) auftritt und zwischen Prüfkopf und Prüfobjekt (32) eine Reflektionsfläche (38) vorgesehen ist, die sich außerhalb des Zentralstrahls, aber innerhalb des Schallfeldes befindet und so angeordnet ist, dass der auf die Reflektionsfläche (38) auftreffende Teil des ausgesandten Ultraschalls nach Reflektion im wesentlichen rechtwinkelig auf die Oberfläche des Prüfobjektes (32) auftrifft, von dort zurückläuft und als Signal (51) für einen Echostart benutzt wird, **dadurch gekennzeichnet, dass** der Prüfkopf ein lineares Array mit n Einzelschwingen (22, 24...) ist, dass jedem Einzelschwinger (22, 24...) eine eigene Reflektionsfläche (38) zugeordnet ist, dass für jeden Einzelschwinger (22, 24...) ein eigenes Echostartsignal (51) erzeugt wird, dass die von jedem Einzelschwinger (22, 24...) aufgenommenen Empfangssignale (52, 54) digitalisiert werden und diese Digitalisierung individuell für jeden Einzelschwinger (22, 24...) mit dem Echostartsignal (52, 54) dieses Einzelschwingers (22, 24...) gestartet wird.

2. Verfahren nach Anspruch 1, dadurch gekenntzeichnet, dass die digitalisierten Empfangssignale (200, 220, ...) (Empfangsdaten) in einem Speicher (66) gespeichert werden und dass während einer Auswertung die digitalisierten Empfangssignale (200, 220, ...) sowohl einzelner Einzelschwinger (22, 24...) als auch unterschiedlicher Kombinationen von Einzelschwingern (22, 24...) nach Amplitude und Laufzeit analysiert werden.

3. Verfahren nach Anspruch 1, **dadurch gekennzeichnet, dass** die n Einzelschwinger (22, 24...) individuell angesteuert werden zur Erzeugung eines individuellen Sendesignals für den jeweiligen Einzelschwinger (22, 24...).

4. Verfahren nach Anspruch 1, **dadurch gekennzeichnet, dass** mehrere, nämlich mindestens zwei Einzelschwinger (22, 24...) zu einer Gruppe zusammen geschaltet werden und dass eine Gruppe für die Dauer dieser Zusammenschaltung wie ein Einzelschwinger (22, 24...) betrieben wird.

5. Verfahren nach Anspruch 1, **dadurch gekennzeichnet, dass** alle Einzelschwinger (22, 24...) den selben Abstand von der Oberfläche des Prüfobjektes (32) haben und dass ihre Hauptstrahlen (30) mit dem selben Einschallwinkel auf die Oberfläche des Prüfobjektes (32) auftreffen, und dass sich die Reflektionsflächen (38) der einzelnen Einzelschwinger (22, 24...) in der selben geometrischen Anordnung zum Einzelschwinger (22, 24...), insbesondere hinsichtlich Abstand vom Hauptstrahl (30) und Winkel zum Hauptstrahl (30), wie bei allen anderen Einzelschwinger (22, 24...) befinden.

6. Verfahren nach Anspruch 1, **dadurch gekennzeichnet, dass** die Einzelschwinger (22, 24...) baugleich ausgeführt sind.

7. Verfahren nach Anspruch 1, **dadurch gekennzeichnet, dass** die Reflektionsflächen (38) baugleich ausgeführt sind, vorzugsweise einstückig zusammenhängend ausgebildet sind.

8. Verfahren nach Anspruch 1, **dadurch gekennzeichnet, dass** die Reflektionsflächen (38) so ausgeführt sind, dass hinter der Reflektionsfläche (38) befindliches Material entweder den Ultraschall abschwächt und/oder so leitet, dass der in das Material eingedrungene Anteil des auf die Reflektionsfläche (38) auftreffenden Ultraschalls weder einen Einzelschwinger (22, 24...) noch das Prüfobjekt (32) erreicht.

9. Vorrichtung zur Durchführung des Verfahrens nach Anspruch 1, die einen Prüfkopf mit zugeordneter Ansteuer- und Auswerteelektronik, eine Vorlaufstrecke, ein Prüfobjekt (32) und zwischen Prüfkopf und Prüfobjekt (32) eine Reflektionsfläche (38) aufweist, die mit einem Randstrahl des Schallfeldes des Prüfkopfes einen spitzen Winkel einschließt und so angeordnet ist, dass der Randstrahl im wesentlichen rechtwinklig auf die Oberfläche des Prüfobjektes (32) auftrifft, **dadurch gekennzeichnet, dass** der Prüfkopf ein lineares Array mit n Einzelschwingern (22, 24...) ist, dass jedem Einzelschwinger (22, 24...) eine eigene Reflektionsfläche (38) zugeordnet ist, dass die Auswerteelektronik einen A/D-Wandler (62) und einen Speicher (66) aufweist, dass in dem Speicher (66) die digitalisierten Empfangssignale (200, 220, ...) der Einzelschwinger (22, 24...) gespeichert sind und dass die Auswerteelektronik eine Auslöseeinheit aufweist, die die Digitalisierung eines Empfangssignals (52, 54) startet, wenn das Echostartsignal (52, 54) des Einzelschwingers (22, 24...) vorliegt.

10. Vorrichtung nach Anspruch 8, dadurch gegenzeichnet, dass sich hinter der Reflektionsfläche (38) Material befindet und dass dieses Material schallabsorbierend für den verwendeten Ultraschall und/oder geometrisch so ausgebildet ist, dass Reflektionen innerhalb des Materials nicht aus der Reflektionsfläche (38) heraus treten und zum Prüfkopf oder zum Prüfobjekt (32) gelangen können.

## Claims

1. Method for the ultrasound inspection of a test object (32), in which ultrasound is emitted by a probe head, reaches the test object (32) via a lead section, and at least one echo signal (52, 54) of the insonified ultrasound is then detected by the probe head, wherein the transmitted ultrasound propagates in a sound field and about a central beam, the central beam does not hit the surface of the test object (32) perpendicularly, and, between the probe head and the test object (32), a reflecting surface (38) is provided which is located outside the central beam but inside the sound field and is disposed in such a way that the part of the transmitted ultrasound incident upon the reflecting surface (38), after being reflected, hits the surface of the test object (32) substantially perpendicularly, returns therefrom and is used as a signal (51) for an echo start, **characterised in that** the probe head is a linear array with n single-element transducers (22, 24, ...), that a separate reflecting surface (38) is assigned to each single-element transducer (22, 24, ...), that a separate echo start signal (51) is generated for each single-element transducer (22, 24, ...), that the received signals (52, 54) recorded by each single-element transducer (22, 24, ...) are digitized and this digitization is individually started for each single-element transducer (22, 24, ...) with the echo start signal (52, 54) of this single-element transducer (22, 24, ...).

2. Method according to claim 1, **characterised in that** the digitized received signals (200, 220, ...) (received data) are stored in a memory (66), and that the digitized received signals (200, 220, ...) of both individual single-element transducers (22, 24, ...) as well as different combinations of single-element transducers (22, 24, ...) are analysed with regard to amplitude and travel time during an evaluation.

3. Method according to claim 1, **characterised in that** the n single-element transducers (22, 24, ...) are individually activated for generating an individual transmit signal for the respective single-element transducer (22, 24, ...).

4. Method according to claim 1, **characterised in that** several, i.e. at least two single-element transducers (22, 24, ...) are interconnected to form a group and that a group is operated like a single-element transducer (22, 24, ...) for the duration of this interconnection.

5. Method according to claim 1, **characterised in that** all single-element transducers (22, 24, ...) have the same distance from the surface of the test object (32) and that their main beams (30) hit the surface of the test object (32) at the same insonification angle, and that the reflecting surfaces (38) of the individual single-element transducers (22, 24, ...) are disposed in the same geometrical arrangement relative to the single-element transducer (22, 24, ...), in particular with regard to the distance from the main beam (30) and the angle to the main beam (30), as is the case for all other single-element transducers (22, 24, ...).

6. Method according to claim 1, **characterised in that** the single-element transducers (22, 24, ...) are designed constructionally identically.

7. Method according to claim 1, **characterised in that** the reflecting surfaces (38) are designed constructionally identically, preferably integrally interconnected.

8. Method according to claim 1, **characterised in that** the reflecting surfaces (38) are designed in such a way that material disposed behind the reflecting surface (38) either attenuates the ultrasound and/or conducts it in such a way that the proportion of the ultrasound incident upon the reflecting surface (38) that has penetrated the material reaches neither a single-element transducer (22, 24, ...) nor the test object (32).

9. Apparatus for carrying out the method according to claim 1, comprising a probe head with an electronic activation and evaluation unit associated therewith, a lead section, a test object (32) and, between the probe head and the test object (32), a reflecting surface (38) which together with a marginal beam of the sound field of the probe head includes an acute angle and is disposed in such a way that the marginal beam hits the surface of the test object (32) substantially perpendicularly, **characterised in that** the probe head is a linear array with n single-element transducers (22, 24, ...), that a separate reflecting surface (38) is assigned to each single-element transducer (22, 24, ...), that the electronic evaluation unit comprises an A/D converter (62) and a memory (66), that the digitized received signals (200, 220, ...) of the single-element transducers (22, 24, ...) are stored in the memory (66), and that the electronic evaluation unit has a trigger unit that starts the digitization of a received signal (52, 54) when the echo start signal (52, 54) of the single-element transducer (22, 24, ...) is present.

10. Apparatus according to claim 8, **characterised in that** material is disposed behind the reflecting surface (38) and that this material is sound absorbing with regard to the ultrasound used and/or is geometrically formed in such a way that reflections within the material cannot escape the reflecting surface (38) and reach the probe head or the test object (32).

## Revendications

1. Procédé de contrôle par ultrasons d'un objet à contrôler (32), dans lequel de l'ultrason est émis par un palpeur, atteint - via un chemin de couplage - ledit objet à contrôler (32), et, ensuite, au moins un signal d'écho (52, 54) de l'ultrason émis dedans est détecté par ledit palpeur, l'ultrason émis se propageant dans un champ sonore et autour d'un rayon central, ledit rayon central rencontrant la surface de l'objet à contrôler (32) non pas à angle droit, et entre ledit palpeur et ledit objet à contrôler (32) étant prévue une surface de réflexion (38) qui est située hors du rayon central, mais à l'intérieur du champ sonore et est disposée de manière à ce que la partie de l'ultrason émis, qui rencontre ladite surface de réflexion (38), rencontre la surface de l'objet à contrôler (32), après réflexion, pour l'essentiel à angle droit, retourne depuis là et soit utilisée en tant que signal (51) pour un début d'écho, **caractérisé par le fait que** ledit palpeur est un réseau linéaire à n transducteurs particuliers (22, 24...), qu'à chacun des transducteurs particuliers (22, 24...) est associée une propre surface de réflexion (38), que pour chacun des transducteurs particuliers (22, 24...) est généré un propre signal de début d'écho (51), que les signaux de réception (52, 54) reçus par chacun des transducteurs particuliers (22, 24...) sont numérisés et que cette numérisation est lancée individuellement pour chacun des transducteurs particuliers (22, 24...) avec le signal de début d'écho (52, 54) de ce transducteur particulier (22, 24...).

2. Procédé selon la revendication 1, **caractérisé par le fait que** les signaux de réception numérisés (200, 220, ...) (données de réception) sont mémorisés dans une mémoire (66) et que, durant une évaluation, les signaux de réception numérisés (200, 220, ...) aussi bien de transducteurs particuliers (22, 24...) individuels que de combinaisons différentes de transducteurs particuliers (22, 24...) sont analysés quant à l'amplitude et au temps de parcours.

3. Procédé selon la revendication 1, **caractérisé par le fait que** lesdits n transducteurs particuliers (22, 24...) sont commandés individuellement pour générer un signal individuel d'émission pour le transducteur particulier (22, 24...) respectif.

4. Procédé selon la revendication 1, **caractérisé par le fait que** plusieurs, à savoir au moins deux transducteurs particuliers (22, 24...) sont interconnectés pour former un groupe et qu'un groupe est opéré comme un transducteur particulier (22, 24...) pour la durée de cette interconnexion.

5. Procédé selon la revendication 1, **caractérisé par le fait que** l'ensemble des transducteurs particuliers (22, 24...) présentent la même distance par rapport à la surface dudit objet à contrôler (32) et que leurs rayons principaux (30) rencontrent la surface de l'objet à contrôler (32) avec le même angle d'incidence et que les surfaces de réflexion (38) des transducteurs particuliers (22, 24...) individuels sont dans le même arrangement géométrique par rapport au transducteur particulier (22, 24...), en particulier quant à la distance par rapport au rayon principal (30) et quant à l'angle par rapport au rayon principal (30), que dans tous les autres transducteurs particuliers (22, 24...).

6. Procédé selon la revendication 1, **caractérisé par le fait que** les transducteurs particuliers (22, 24...) sont construits de manière identique entre eux.

7. Procédé selon la revendication 1, **caractérisé par le fait que** les surfaces de réflexion (38) sont réalisées de manière identique, de préférence d'une seule pièce de façon continue.

8. Procédé selon la revendication 1, **caractérisé par le fait que** les surfaces de réflexion (38) sont réalisées de manière à ce que de la matière se trouvant derrière la surface de réflexion (38) ou affaiblisse l'ultrason et/ou le dirige de telle sorte que la part de l'ultrason rencontrant ladite surface de réflexion (38), qui a pénétré dans la matière n'atteigne ni un transducteur particulier (22, 24...) ni l'objet à contrôler (32).

9. Dispositif pour la mise en oeuvre du procédé selon la revendication 1, comprenant un palpeur avec une électronique associée de commande et d'évaluation, un chemin de couplage, un objet à contrôler (32) et - entre ledit palpeur et ledit objet à contrôler (32) - une surface de réflexion (38) qui forme un angle aigu avec un rayon marginal du champ sonore du palpeur et est disposée de manière à ce que le rayon marginal rencontre ladite surface de l'objet à contrôler (32) pour l'essentiel à angle droit, **caractérisé par le fait que** ledit palpeur est un réseau linéaire à n transducteurs particuliers (22, 24...), qu'à chacun des transducteurs particuliers (22, 24...) est associée une propre surface de réflexion (38), que ladite électronique d'évaluation comprend un convertisseur analogique-numérique (62) et une mémoire (66), que dans ladite mémoire (66) sont mémorisés les signaux de réception numérisés (200, 220, ...) des transducteurs particuliers (22, 24...) et que ladite électronique d'évaluation comprend une unité de déclenchement qui lance la numérisation d'un signal de réception (52, 54) en cas de présence du signal de début d'écho (52, 54) du transducteur particulier (22, 24...).

10. Dispositif selon la revendication 9, **caractérisé par le fait que** de la matière se trouve derrière la surface de réflexion (38) et que cette matière est une matière absorbant le son pour l'ultrason utilisé et/ou est réalisée géométriquement de manière à ce que des réflexions à l'intérieur de la matière ne puissent pas sortir de la surface de réflexion (38) et atteindre le palpeur ou l'objet à contrôler (32).
